# EUROPEAN PATENT APPLICATION

(11) **EP 4 456 279 A1**
(43) Date of publication of application: **30.10.2024**
(21) Application number: 23861776.5
(22) Date of filing: 13.01.2023
(51) Int. Cl.: H01M 50/15, H01M 50/176, H01M 50/184

(54) **TOP COVER ASSEMBLY AND BATTERY CELL**

(30) Priority: 06.09.2022 CN 202222372003 U
(71) Applicant: Sunwoda Mobility Energy Technology Co., Ltd., Shenzhen, Guangdong 518000 (CN)
(72) Inventor: YANG, Wei, Shenzhen, Guangdong 518000 (CN); DAI, Hengwei, Shenzhen, Guangdong 518000 (CN)
(74) Representative: Range, Christopher William
(86) International application number: PCT/CN2023/072194
(87) International publication number: WO 2024/051064

(57) **Abstract**

A top cover assembly and a single battery are disclosed. The top cover assembly includes a top cover sheet and a lower plastic, the lower plastic is connected to one side of the top cover sheet, the lower plastic includes a first connecting member and a second connecting member which are arranged at an interval, and a buffer member connected between the first connecting member and the second connecting member, and the buffer member is capable of expanding and contracting according to a change of a distance between the first connecting member and the second connecting member. By arranging the buffer member capable of expanding and contracting according to the change of the distance between the first connecting member and the second connecting member, an acting force exerted by the lower plastic on a post terminal can be reduced, which avoids the post terminal from deviating due to thermal expansion and contraction of the lower plastic, so that the post terminal is cooperated with a sealing ring to maintain a good sealing ability.

## Description

### CROSS-REFERENCE TO RELATED APPLICATION

The present application claims priority to Chinese patent application No. 202222372003.0, titled "TOP COVER ASSEMBLY AND SINGLE BATTERY", and filed on September 6, 2022 to the Patent Office of the People's Republic of China, the entire contents of which are incorporated herein by reference.

### TECHNICAL FIELD

The present application relates to the technical field of energy storage devices, and particularly to a top cover assembly and a single battery.

### BACKGROUND

With the development of technology, power batteries are widely used in electric vehicles as an energy system. A typical power battery includes a top cover assembly for closing an opening of a shell. The top cover assembly includes a post terminal, a top cover sheet and a lower plastic connected to the top cover sheet. The top cover sheet and the lower plastic are both provided with a post terminal mounting hole, and the post terminal is configured to be inserted into the post terminal mounting hole for electrical connection between a battery cell and an external electrical device. In order to realize insulation between the post terminal and the top cover sheet, a sealing ring is arranged around the post terminal. However, when the lower plastic is subjected to thermal expansion and contraction, it may cause deviation of the post terminal, leading to the failure of sealing.

### SUMMARY

The present application aims to address at least one of the technical problems in the prior art. Therefore, the present application provides a top cover assembly, which can avoid a post terminal from deviating due to thermal expansion and contraction of a lower plastic, thus ensuring sealing ability.

The present application further provides a single battery applying the top cover assembly above.

A top cover assembly in First Embodiment of the present application includes:
a top cover sheet; and
a lower plastic connected to one side of the top cover sheet, wherein the lower plastic includes a first connecting member and a second connecting member which are arranged at an interval, and a buffer member connected between the first connecting member and the second connecting member, and the buffer member is capable of expanding and contracting according to a change of a distance between the first connecting member and the second connecting member.

A battery module according to the embodiment of the present application at least has the following beneficial effects.

By arranging the buffer member capable of expanding and contracting according to the change of the distance between the first connecting member and the second connecting member, an acting force exerted by the lower plastic on a post terminal can be reduced, which avoids the post terminal from deviating due to thermal expansion and contraction of the lower plastic, so that the post terminal is cooperated with a sealing ring to maintain a good sealing ability.

In other embodiments of the present application, the buffer member includes a bending portion, and the bending portion is bent towards a thickness direction of the lower plastic.

In other embodiments of the present application, the first connecting member includes a first main body portion and a first convex portion, the first main body portion is connected to the top cover sheet, the first convex portion is arranged on one side of the first main body portion far away from the top cover sheet, the second connecting member includes a second main body portion and a second convex portion, the second main body portion is connected to the top cover sheet, the second convex portion is arranged on one side of the second main body portion far away from the top cover sheet, two ends of the bending portion are respectively connected to the first convex portion and the second convex portion, the bending portion is bent towards the top cover sheet, and the bending portion and the top cover sheet are arranged at an interval.

In other embodiments of the present application, the buffer member includes a bending portion, and the bending portion is bent towards a width direction of the lower plastic.

In other embodiments of the present application, the buffer member includes a first buffering section and a second buffering section, one end of the first buffering section and one end of the second buffering section are respectively connected to the first connecting member and the second connecting member, and the other end of the first buffering section is connected with the other end of the second buffering section to form the bending portion;
or, the bending portion is arc-shaped.

In other embodiments of the present application, the lower plastic includes a plurality of buffer members arranged at intervals along the width direction of the lower plastic;
and/or, the buffer member includes a plurality of bending portions sequentially connected along a length direction of the lower plastic.

In other embodiments of the present application, the buffer member includes a deformation portion, a width of the deformation portion is smaller than widths of other parts of the lower plastic, and/or a thickness of the deformation portion is smaller than thicknesses of other parts of the lower plastic.

In other embodiments of the present application, the buffer member includes a deformation portion, a first connecting portion and a second connecting portion, one end of the deformation portion is connected to the first connecting member through the first connecting portion, the other end of the deformation portion is connected to the second connecting member through the second connecting portion, a width of the deformation portion is smaller than widths of the first connecting portion and the second connecting portion, and/or a thickness of the deformation portion is smaller than thicknesses of the first connecting portion and the second connecting portion.

In other embodiments of the present application, the lower plastic includes a plurality of buffer members arranged at intervals along the width direction of the lower plastic; and/or, the lower plastic includes a plurality of deformation portions sequentially connected along the length direction of the lower plastic.

A single battery in Second Embodiment of the present application includes:
a battery shell;
the top cover assembly covered on the battery shell; and
a battery cell located in the battery shell.

The additional aspects and advantages of the present application will be given in part in the following description, and will become apparent in part from the following description, or will be learned through the practice of the present application.

### BRIEF DESCRIPTION OF THE DRAWINGS

The present application is further described hereinafter with reference to the drawings and embodiments, wherein:
FIG. 1 is an exploded diagram of a top cover assembly in the related art;
FIG. 2 is a sectional view of the top cover assembly in FIG. 1;
FIG. 3 is an enlarged diagram of a region A in FIG. 2;
FIG. 4 is a stereoscopic diagram of a top cover assembly in an embodiment of the present application;
FIG. 5 is an exploded diagram of the top cover assembly in FIG. 4;
FIG. 6 is a sectional view of the top cover assembly in FIG. 4;
FIG. 7 is an enlarged diagram of a region B in FIG. 6;
FIG. 8 is a stereoscopic diagram of a top cover assembly in another embodiment of the present application;
FIG. 9 is an enlarged diagram of a region C in FIG. 8;
FIG. 10 is a stereoscopic diagram of a top cover assembly in yet another embodiment of the present application;
FIG. 11 is a stereoscopic diagram of a top cover assembly in yet another embodiment of the present application;
FIG. 12 is an enlarged diagram of a region D in FIG. 11;
FIG. 13 is an enlarged diagram of a top cover assembly in yet another embodiment of the present application;
FIG. 14 is an enlarged diagram of a top cover assembly in yet another embodiment of the present application;
FIG. 15 is a sectional view of a top cover assembly in yet another embodiment of the present application;
FIG. 16 is an enlarged diagram of a region E in FIG. 15; and
FIG. 17 is an exploded diagram of a single battery in an embodiment of the present application.

### Reference numerals:

100 refers to top cover assembly, 110 refers to top cover sheet, 111 refers to first through hole, 112 refers to second through hole, 120 refers to lower plastic, 121 refers to first connecting member, 1211 refers to third through hole, 1212 refers to first main body portion, 1213 refers to first convex portion, 122 refers to second connecting member, 1221 refers to fourth through hole, 1222 refers to second main body portion, 1223 refers to second convex portion, 123 refers to buffer member, 1231 refers to bending portion, 1232 refers to first buffering section, 1233 refers to second buffering section, 1234 refers to deformation portion, 1235 refers to first connecting portion, 1236 refers to second connecting portion, 130 refers to first post terminal, 140 refers to second post terminal, and 150 refers to sealing ring;
200 refers to battery shell; and
300 refers to battery cell.

### DETAILED DESCRIPTION

Embodiments of the present application will be described in detail hereinafter. Examples of the embodiments are shown in the drawings. The same or similar reference numerals throughout the drawings denote the same or similar elements or elements having the same or similar functions. The embodiments described hereinafter with reference to the drawings are exemplary and are only intended to explain the present application, but should not be construed as limiting the present application.

In the description of the present application, it should be understood that the orientation or position relationships indicated by the terms such as "upper", "lower", "front", "rear", "left", "right" and the like, refer to the orientation or position relationships shown in the drawings, which are only intended to facilitate describing the present application and simplifying the description, and do not indicate or imply that the indicated devices or elements must have a specific orientation, be constructed and operated in a specific orientation, and therefore cannot be understood as a limitation of the present application.

In the description of the present application, the term "several" refers to being one or more, the term "multiple" refers to being two or more, and the terms "greater than", "less than", "more than" and the like are understood as not including the following number, while the terms "above", "below", "within" and the like are understood as including following number. If there is the description of first and second, it is only for the purpose of distinguishing technical features, and should not be understood as indicating or implying relative importance, implicitly indicating the number of the indicated technical features or implicitly indicating the order of the indicated technical features.

In the description of the present application, the terms "arrangement", "installation", "connection", and the like should be understood in a broad sense unless otherwise specified and defined. The specific meaning of the above terms in the present application may be reasonably determined according to specific contents of the technical solutions by those of ordinary skills in the art.

In the description of the present application, the description with reference to the terms "an embodiment", "some embodiments", "illustrative embodiment", "example", "specific example" or "some examples", etc., refers to that specific features, structures, materials, or characteristics described with reference to the embodiments or examples are included in at least one embodiment or example of the present application. In the specification, the schematic representation of the above terms does not necessarily mean the same embodiment or example. Moreover, the specific features, structures, materials or characteristics described may be combined in any one or more embodiments or examples in a suitable manner.

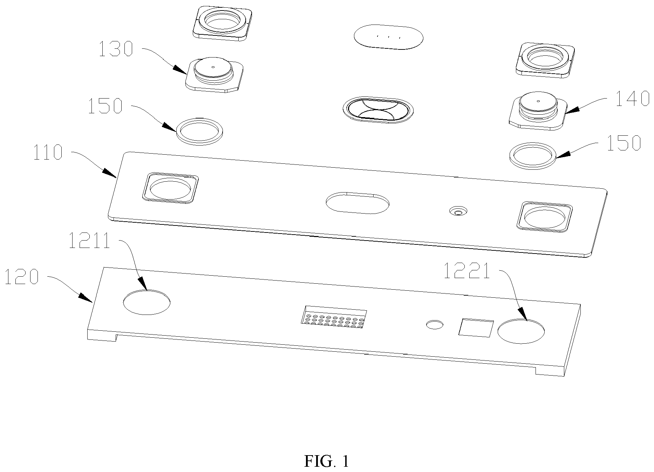

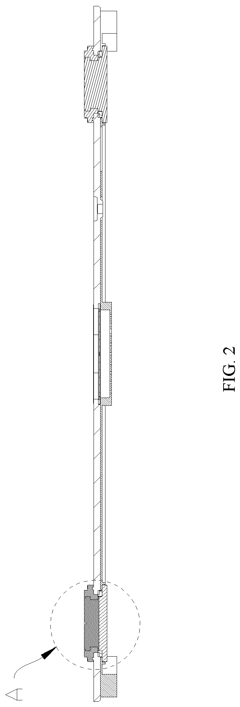

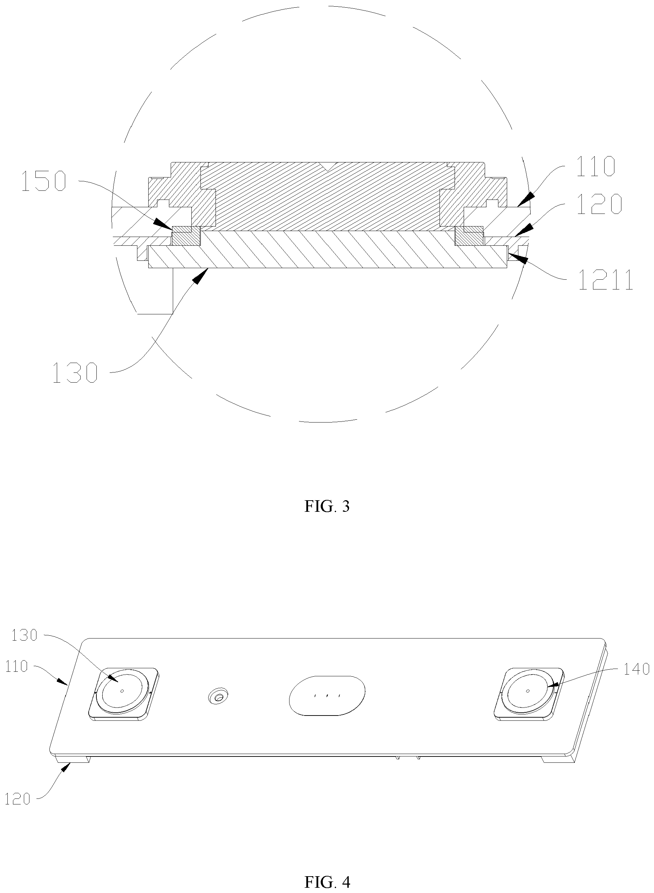

In the related art, a post terminal and a top cover sheet are insulated through a sealing ring. Specifically, with reference to FIG. 1 to FIG. 3, the top cover sheet 110 is provided with a first through hole 111 and a second through hole 112 respectively, and a lower plastic 120 is connected to one side (such as a lower side in the figures) of the top cover sheet 110, and provided with a third through hole 1211 and a fourth through hole 1221 corresponding to the first through hole 111 and the second through hole 112 respectively, which means that the first through hole 111 and the third through hole 1211 are correspondingly arranged and communicated with each other, and the second through hole 112 and the fourth through hole 1221 are correspondingly arranged and communicated with each other. A top cover assembly of a single battery further includes a first post terminal 130 and a second post terminal 140, the first post terminal 130 is configured to be inserted into the first through hole 111 and the third through hole 1211, and is fixedly connected with the top cover sheet 110 through an upper plastic, the second post terminal 140 is configured to be inserted into the second through hole 112 and the fourth through hole 1221, and is fixedly connected with the top cover sheet 110 through the upper plastic, and sealing rings 150 are arranged around the first post terminal 130 and the second post terminal 140 respectively. In a normal state, the post terminal is connected to the top cover sheet 110 in a normal posture as shown in the figures, and the sealing ring 150 normally plays a sealing role. However, when the lower plastic 120 is subjected to thermal expansion in a high-temperature environment, as shown in FIG. 3, the lower plastic 120 may exert a leftward acting force on the first post terminal 130, and when the lower plastic 120 is subjected to cold contraction in a low-temperature environment, the lower plastic 120 may exert a leftward acting force on the first post terminal 130. Both cases may cause deviation of the first post terminal 130, leading to the failure of sealing by the sealing ring 150.

Based on the above, an embodiment of the present application provides a top cover assembly, in which the problem of failure of sealing caused by thermal expansion and contraction of the lower plastic is addressed by dividing the lower plastic into two parts and arranging a buffer member for absorbing deformation between the two parts, which will be described in detail hereinafter with reference to the drawings.

With reference to FIG. 4 to FIG. 7, the top cover assembly 100 of the embodiment includes a top cover sheet 110 and a lower plastic 120, and the top cover sheet 110 is provided with the first through hole 111 and the second through hole 112 respectively. The lower plastic 120 is connected to one side (such as the lower side in the figures) of the top cover sheet 110, and includes a first connecting member 121 and a second connecting member 122 arranged at an interval. The first connecting member 121 is provided with a third through hole 1211, and the second connecting member 122 is provided with a fourth through hole 1221. The first through hole 111 is arranged corresponding to the third through hole 1211 in the first connecting member 121, and the second through hole 112 is arranged corresponding to the fourth through hole 1221 in the second connecting 122. The first post terminal 130 is configured to be inserted into the first through hole 111 and the third through hole 1211, and the second post terminal 140 is configured to be inserted into the second through hole 112 and the fourth through hole 1221.

The lower plastic 120 further includes a buffer member 123 connected between the first connecting member 121 and the second connecting member 122, and the buffer member 123 may be integrated with the first connecting member 121 and the second connecting member 122. The buffer member 123 has elasticity. When the lower plastic 120 is subjected to thermal expansion or cold contraction, a distance between the first connecting member 121 and the second connecting member 122 is changed, and the buffer member 123 is capable of expanding and contracting accordingly to adapt to the change of the distance. Specifically, when the lower plastic 120 is subjected to thermal expansion, the distance between the first connecting member 121 and the second connecting member 122 is reduced, and the buffer member 123 is in a contracting state, and when the lower plastic 120 is subjected to cold contraction, the distance between the first connecting member 121 and the second connecting member 122 is increased, and the buffer member 123 is in an expanding state. Therefore, an acting force exerted by the lower plastic 120 on the post terminal can be reduced, which avoids the post terminal from deviating due to the thermal expansion and contraction of the lower plastic, so that the post terminal is cooperated with the sealing ring 150 to maintain a good sealing ability.

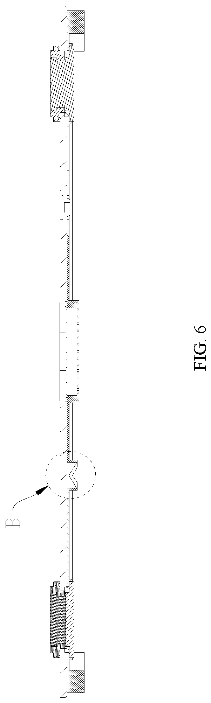

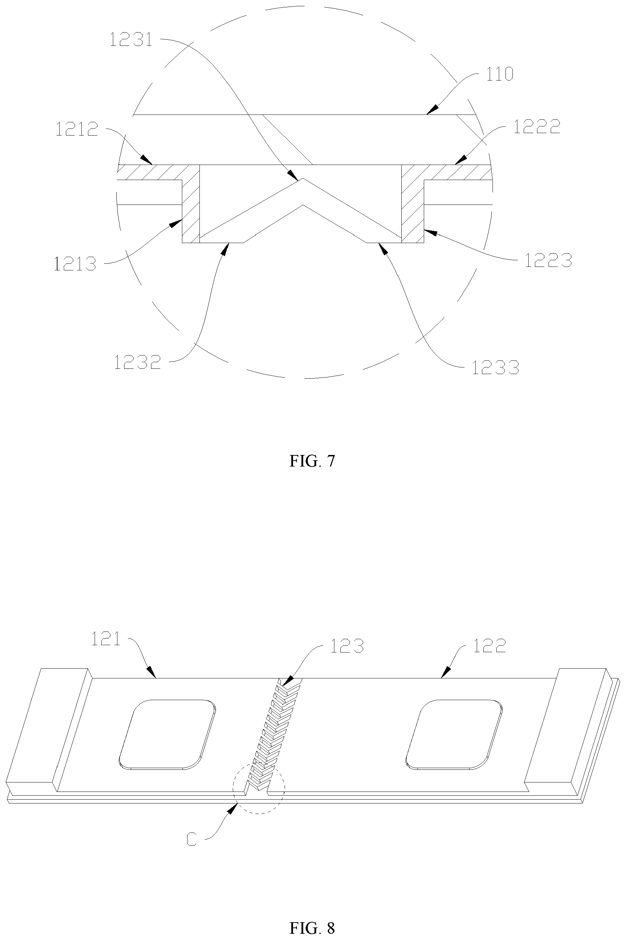

With reference to FIG. 6 and FIG. 7, in some embodiments, the buffer member 123 includes a bending portion 1231, and two ends of the bending portion 1231 are respectively connected with the first connecting member 121 and the second connecting member 122. The bending portion 1231 is bent towards a thickness direction of the lower plastic 120. When the lower plastic 120 is subjected to thermal expansion, a bending angle of the bending portion 1231 is reduced, and the buffer member 123 is in the contracting state, and when the lower plastic 120 is subjected to cold contraction, the bending angle of the bending portion 1231 is increased, and the buffer member 123 is in the expanding state.

As a specific implementation of the buffer member 123 in the above embodiment, with reference to FIG. 7, the first connecting member 121 includes a first main body portion 1212 and a first convex portion 1213, the first main body portion 1212 is connected to the top cover sheet 110 and provided with the first through hole 111, and the first convex portion 1213 is arranged on one side (such as the lower side in the figures) of the first main body portion 1212 far away from the top cover sheet 110. Specifically, the first main body portion 1212 may have a plate-like structure, the first convex portion 1213 may be a bump or have a plate-like structure perpendicular to the first main body portion 1212 in the figures, and the first main body portion 1212 may be integrated with the first convex portion 1213. Similarly, the second connecting member 122 includes a second main body portion 1222 and a second convex portion 1223, the second main body portion 1222 is connected to the top cover sheet 110 and provided with the second through hole 112, and the second convex portion 1223 is arranged on one side (such as the lower side in the figures) of the second main body portion 1222 far away from the top cover sheet 110, which means that the first convex portion 1213 and the second convex portion 1223 are located on the same side, and are both arranged to be far away from the top cover sheet 110.

In order to make the bending portion 1231 expand and contract more easily, the bending portion 1231 needs to have a certain bending degree, so that a height of the bending portion is usually greater than a thickness of the traditional lower plastic. Meanwhile, the height of the bending portion 1231 may be changed during expansion and contraction. In order to avoid the bending portion 1231 from squeezing other structures during expansion and contraction, it is necessary to make the highest point of the bending portion 1231 not higher than an upper end of the lower plastic 120 and the lowest point of the bending portion not lower than a lower end of the lower plastic 120, which may lead to an overall increase of the thickness of the lower plastic 120, thus reducing a capacity of a battery cell and further reducing an energy density of a battery. On this basis, two ends of the bending portion 1231 are respectively connected to the first convex portion 1213 and the second convex portion 1223, and specifically connected to bottom ends of the first convex portion 1213 and the second convex portion 1223, the bending portion 1231 is bent towards the top cover sheet 110, and the bending portion 1231 and the top cover sheet 110 are arranged at an interval. In this way, when the lower plastic 120 is subjected to thermal expansion, the bending portion 1231 may move towards the top cover sheet 110, but even if the bending portion moves to the highest point, the two may not contact with each other, so as to avoid the bending portion 1231 from squeezing the top cover sheet 110 during thermal expansion and contraction. Meanwhile, because the bending portion 1231 is bent towards the top cover sheet 110, the lowest point of the bending portion 1231 will not be lower than lowest points of the first convex portion 1213 and the second convex portion 1223, which means that, a change of the height of the bending portion 1231 is limited between the first convex portion 1213 and the second convex portion 1223, which avoids the bending portion 1231 from squeezing lower components. In addition, thicknesses of the first main body portion 1212 and the second main body portion 1222 can be reduced, so that a space occupied by the lower plastic 120 in the shell is reduced.

With reference to FIG. 8 to FIG. 10, in some embodiments, the buffer member 123 also includes the bending portion 1231, and two ends of the bending portion 1231 are respectively connected with the first connecting member 121 and the second connecting member 122. A difference between this embodiment and the embodiments shown in FIG. 6 and FIG. 7 is that: the bending portion 1231 is bent towards a width direction of the lower plastic 120. When the lower plastic 120 is subjected to thermal expansion, a bending angle of the bending portion 1231 is reduced, and the buffer member 123 is in the contracting state, and when the lower plastic 120 is subjected to cold contraction, the bending angle of the bending portion 1231 is increased, and the buffer member 123 is in the expanding state, thus also having the buffering function.

With reference to FIG. 6 to FIG. 9, in some specific embodiments, the buffer member 123 includes a first buffering section 1232 and a second buffering section 1233, the first buffering section 1232 and the second buffering section 1233 are both arranged obliquely, one end of the first buffering section 1232 is connected to the first connecting member 121, one end of the second buffering section 1233 is connected to the second connecting member 122, and the other end of the first buffering section 1232 is connected with the other end of the second buffering section 1233 to form the bending portion 1231 above.

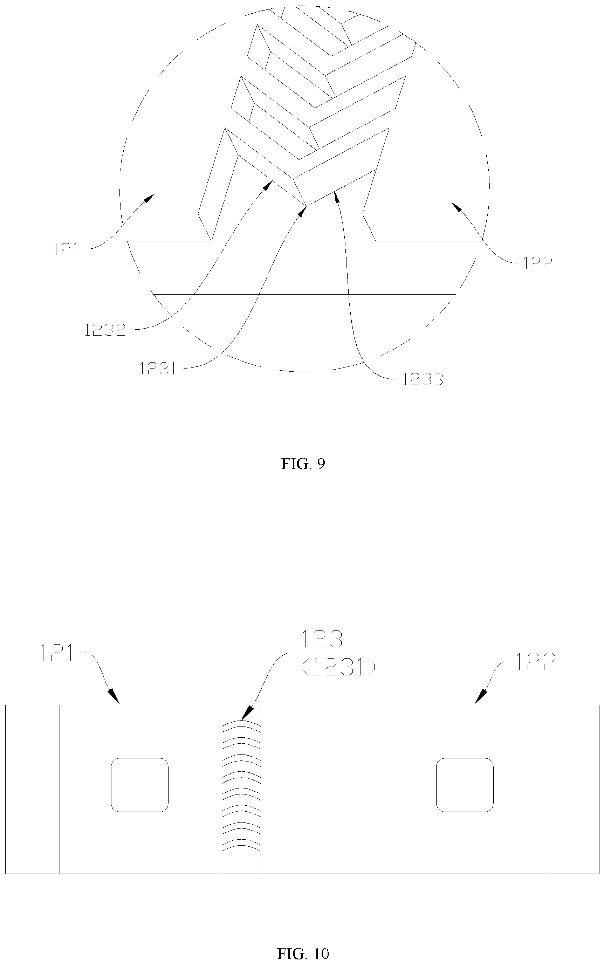

With reference to FIG. 10, in other specific embodiments, the bending portion 1231 is arc-shaped.

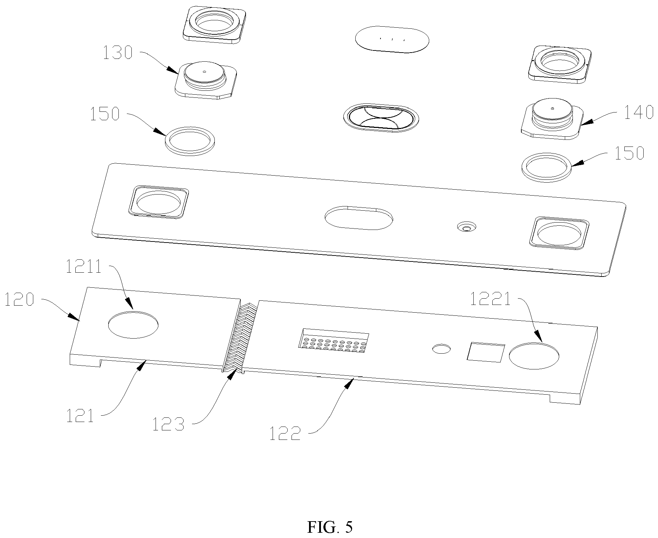

With reference to FIG. 5 to FIG. 9, in some specific embodiments, the lower plastic 120 includes a plurality of buffer members 123 arranged at intervals along the width direction of the lower plastic 120, which can improve a connection strength between the first connecting member 121 and the second connecting member 122.

In other embodiments, the buffer member 123 includes a plurality of bending portions 1231 sequentially connected along the length direction of the lower plastic 120, and the bending portions 1231 are capable of expanding and contracting synchronously, thus reducing an expansion and contraction magnitude of a single bending portion 1231, and avoiding the bending portion 1231 from excessive deformation.

It should be noted that the above embodiments may be used in combination, which means that, the lower plastic 120 includes a plurality of buffer members 123 arranged at intervals along the width direction of the lower plastic 120, and each of the buffer members 123 includes a plurality of bending portions 1231 sequentially connected along the length direction of the lower plastic 120, thus serving the dual purpose of improving the connection strength and reducing the expansion and contraction magnitude of the single bending portion 1231.

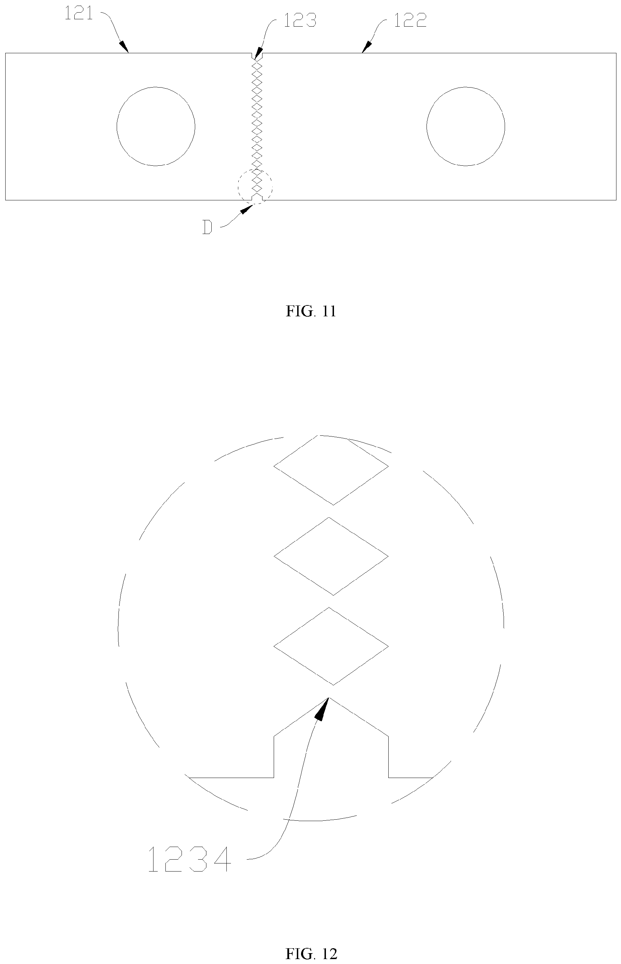

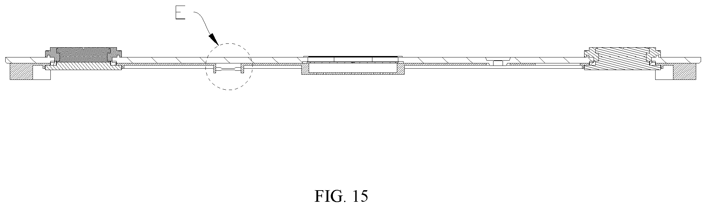

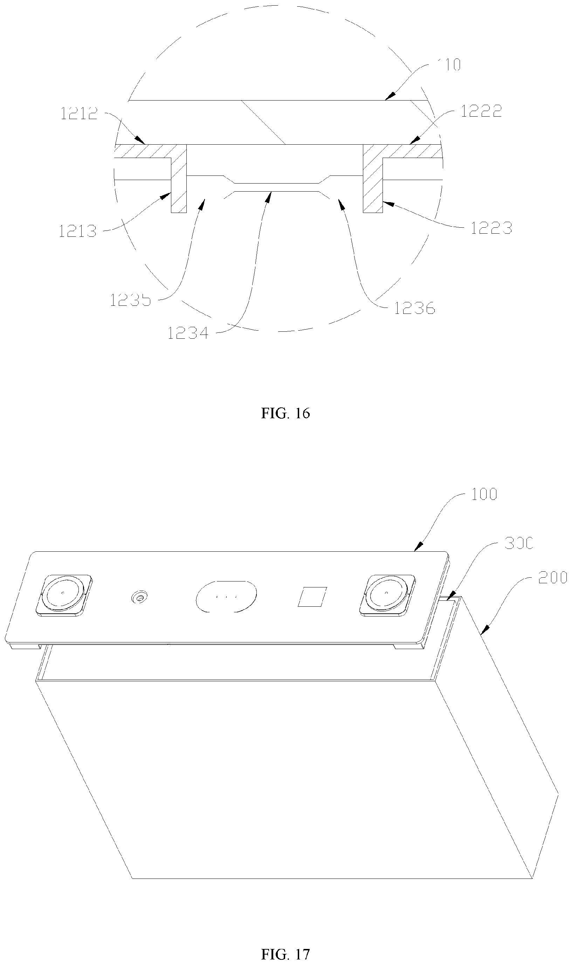

The present application further provides other ways to realize the expansion and contraction of the buffer member 123. For example, with reference to FIG. 11 to FIG. 14, the buffer member 123 includes a deformation portion 1234, a width of the deformation portion 1234 is smaller than widths of other parts of the lower plastic 120, or, with reference to FIG. 15 and FIG. 16, a thickness of the deformation portion 1234 is smaller than thicknesses of other parts of the lower plastic 120, so that the deformation portion 1234 forms a weakness part of the buffer member 123, and the deformation may occur under a certain acting force. A difference between these embodiments and the above embodiments is that: the buffer member 123 of these embodiments may only be bent when the lower plastic 120 is subjected to thermal expansion and contraction.

It should be noted that the above embodiments may be used in combination, which means that, the width and the thickness of the deformation portion 1234 are both smaller than the widths and the thicknesses of other parts of the lower plastic 120.

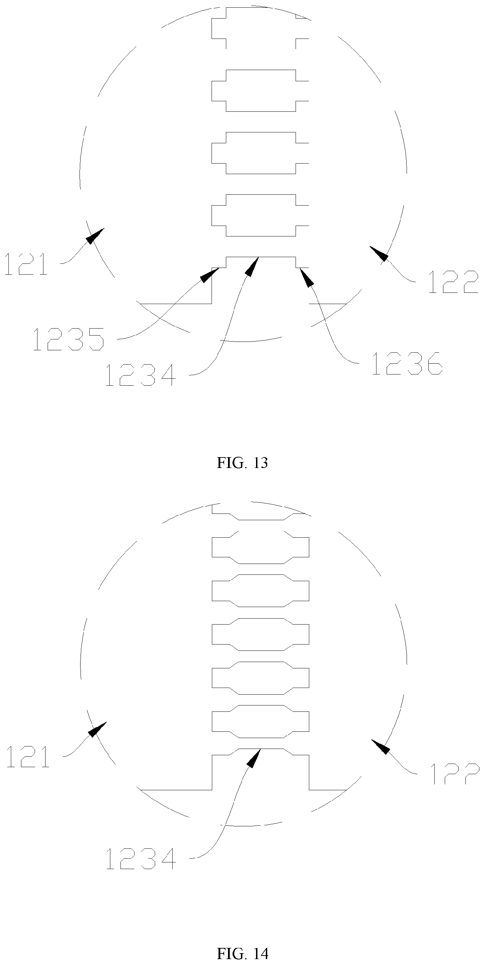

With reference to FIG. 13 and FIG. 16, as a specific implementation of the buffer member 123, the buffer member 123 is a flat structure as a whole flush with the first connecting member 121 and the second connecting member 122, which includes the deformation portion 1234, a first connecting portion 1235 and a second connecting portion 1236, one end of the deformation portion 1234 is connected to the first connecting member 121 through the first connecting portion 1235, the other end of the deformation portion 1234 is connected to the second connecting member 122 through the second connecting portion 1236, thicknesses of the first connecting portion 1235 and the first connecting portion 121 may be equal, and thicknesses of the second connecting portion 1236 and the second connecting member 122 may be equal. In FIG. 13, the width of the deformation portion 1234 is smaller than widths of the first connecting portion 1235 and the second connecting portion 1236, and when the lower plastic 120 is subjected to thermal expansion and contraction, the deformation portion 1234 is bent towards the width direction to make the buffer member 123 expand and contract. In FIG. 16, the thickness of the deformation portion 1234 is smaller than thicknesses of the first connecting part 1235 and the second connecting part 1236, and when the lower plastic 120 is subjected to thermal expansion and contraction, the deformation portion 1234 is bent towards the thickness direction to make the buffer member 123 expand and contract.

With reference to FIG. 11 to FIG. 16, in some specific embodiments, the lower plastic 120 includes a plurality of buffer members 123 arranged at intervals along the width direction of the lower plastic 120, which can improve a connection strength between the first connecting member 121 and the second connecting member 122.

In other embodiments, the lower plastic 120 includes a plurality of deformation portions 1234 sequentially connected along the length direction of the lower plastic 120, and the deformation portions 1234 are capable of expanding and contracting synchronously, thus reducing an expansion and contraction magnitude of a single deformation portion 1234, and avoiding the deformation portion 1234 from excessive deformation.

It should be noted that the above embodiments may be used in combination, which means that, the lower plastic 120 includes a plurality of buffer members 123 arranged at intervals along the width direction of the lower plastic 120, and each of the single buffer members 123 includes a plurality of deformation portions 1234 sequentially connected along the length direction of the lower plastic 120, thus serving the dual purpose of improving the connection strength and reducing the expansion and contraction magnitude of the single deformation portion 1234.

An embodiment of the present application further provides a single battery, and with reference to FIG. 17, the single battery includes a battery shell 200, a battery cell 300 and the top cover assembly 100 of the above embodiments, wherein the battery cell 300 is located in the battery shell 200, and the top cover assembly 100 is covered on the battery shell 200.

The embodiments of the present application are described in detail with reference to the drawings above, but the present application is not limited to the above embodiments, and various changes may also be made within the knowledge scope of those of ordinary skills in the art without departing from the purpose of the present application. In addition, the embodiments of the present application and the features in the embodiments may be combined with each other without conflict.

## Claims

1. A top cover assembly, comprising:
a top cover sheet; and
a lower plastic connected to one side of the top cover sheet, wherein the lower plastic comprises a first connecting member and a second connecting member which are arranged at an interval, and a buffer member connected between the first connecting member and the second connecting member, the buffer member is capable of expanding and contracting according to a change of a distance between the first connecting member and the second connecting member.

2. The top cover assembly according to claim 1, wherein the buffer member comprises a bending portion, and the bending portion is bent towards a thickness direction of the lower plastic.

3. The top cover assembly according to claim 2, wherein the first connecting member comprises a first main body portion and a first convex portion, the first main body portion is connected to the top cover sheet, the first convex portion is arranged on one side of the first main body portion far away from the top cover sheet, the second connecting member comprises a second main body portion and a second convex portion, the second main body portion is connected to the top cover sheet, the second convex portion is arranged on one side of the second main body portion far away from the top cover sheet, two ends of the bending portion are respectively connected to the first convex portion and the second convex portion, the bending portion is bent towards the top cover sheet, and the bending portion and the top cover sheet are arranged at an interval.

4. The top cover assembly according to claim 1, wherein the buffer member comprises a bending portion, and the bending portion is bent towards a width direction of the lower plastic.

5. The top cover assembly according to any one of claims 2 to 4, wherein the buffer member comprises a first buffering section and a second buffering section, one end of the first buffering section and one end of the second buffering section are respectively connected to the first connecting member and the second connecting member, and the other end of the first buffering section is connected with the other end of the second buffering section to form the bending portion;
or, the bending portion is arc-shaped.

6. The top cover assembly according to any one of claims 2 to 4, wherein the lower plastic comprises a plurality of buffer members arranged at intervals along a width direction of the lower plastic;
and/or, the buffer member comprises a plurality of bending portions sequentially connected along a length direction of the lower plastic.

7. The top cover assembly according to claim 1, wherein the buffer member comprises a deformation portion, a width of the deformation portion is smaller than widths of other parts of the lower plastic, and/or a thickness of the deformation portion is smaller than thicknesses of other parts of the lower plastic.

8. The top cover assembly according to claim 1, wherein the buffer member comprises a deformation portion, a first connecting portion and a second connecting portion, one end of the deformation portion is connected to the first connecting member through the first connecting portion, the other end of the deformation portion is connected to the second connecting member through the second connecting portion, a width of the deformation portion is smaller than widths of the first connecting portion and the second connecting portion, and/or a thickness of the deformation portion is smaller than thicknesses of the first connecting portion and the second connecting portion.

9. The top cover assembly according to claim 7 or 8, wherein the lower plastic comprises a plurality of buffer members arranged at intervals along a width direction of the lower plastic; and/or, the lower plastic comprises a plurality of deformation portions sequentially connected along a length direction of the lower plastic.

10. A single battery, comprising:
a battery shell;
the top cover assembly according to any one of claims 1 to 9 covered on the battery shell; and
a battery cell located in the battery shell.
